# EUROPEAN PATENT APPLICATION

(11) **EP 4 819 543 A1**
(43) Date of publication of application: **07.10.2026**
(21) Application number: 26166837.0
(22) Date of filing: 23.03.2026
(51) Int. Cl.: H04L 9/40, H04L 9/32

(54) **ROBOT SYSTEM**

(30) Priority: 31.03.2025 JP 2025057990
(71) Applicant: Seiko Epson Corporation, Tokyo 160-8801 (JP)
(72) Inventor: OGASAWARA, Naoki, Suwa-shi, Nagano, 392-8502 (JP)
(74) Representative: MERH-IP Matias Erny Reichl Hoffmann Patentanwälte PartG mbB

(57) **Abstract**

A robot system includes a robot control device that controls an actuation of a robot, and an external device that communicates with the robot control device. The robot control device includes a drive control section that controls the actuation of the robot, a first communication section that communicates with the external device, a first storage section that stores a public key and unique data of the robot, and a first verification section that performs signature verification. The external device includes a second communication section that communicates with the first communication section, a second storage section that stores a private key, and a first creation section that creates, using the private key, a file for verification of the unique data of the robot, which is subject to signature verification and is received by the second communication section from the first communication section. The first verification section performs signature verification, using the public key, on the file for verification that is transmitted from the second communication section and received by the first communication section.

## Description

### BACKGROUND

### 1. Technical Field

The present disclosure relates to a robot system.

### 2. Related Art

In recent years, in factories, various robots and peripheral devices thereof have been used to automate work that has been performed manually, due to rising labor costs and a shortage of human resources. The robot is controlled in actuation by a robot control device. The robot control device includes a storage section that stores various programs, and a processing section that executes the programs stored in the storage section.

In such a robot control device, from the viewpoint of improving safety, it is preferable to confirm, at the time of the start of the robot control device, whether various programs are in an appropriate state and, in particular, whether the various programs have not been tampered with or the like in an unauthorized manner by an attack from the outside. As such a method, a method of detecting the appropriateness of programs, including whether or not the programs have been tampered with or the like, by signing the various programs, storing the various programs, and verifying the signatures of the various programs at startup is known.

For example, in the information processing apparatus described in JP-A-2019-175000, the operation of performing signature verification on each of the stored various programs one by one and starting the program in a case where the signature verification is successful is performed for each program. As a result, the program can be started after confirming that the program has not been tampered with, and safety can be ensured.

However, the information processing apparatus described in JP-A-2019-175000 has a configuration in which the various programs are stored after being signed and the signature verification of the various programs is performed at the time of the start, and the programs and data that are updated at any time, and data transmitted and received with the external device are not included in the various programs for which the signature verification is performed. That is, the information processing apparatus described in JP-A-2019-175000 has insufficient safety (security robustness).

### SUMMARY

According to an aspect of the present disclosure, there is provided a robot system including:
a robot control device configured to control actuation of a robot;
an external device configured to communicate with the robot control device,
in which the robot control device includes
   a drive control section configured to control the actuation of the robot,
   a first communication section configured to perform communication with the external device,
   a first storage section in which a public key and unique data of the robot are stored, and
   a first verification section configured to perform signature verification,
the external device includes
   a second communication section configured to perform communication with the first communication section,
   a second storage section in which a private key is stored, and
   a first creation section configured to create, using the private key, a file for verification of the unique data of the robot, the unique data being subject to signature verification and being received by the second communication section from the first communication section, and
the first verification section performs signature verification, using the public key, on the file for verification that is transmitted from the second communication section and that is received by the first communication section.

According to another aspect of the present disclosure, there is provided a robot system including:
a robot control device configured to control actuation of a robot;
an external device configured to communicate with the robot control device,
in which the robot control device includes
   a drive control section configured to control the actuation of the robot,
   a third communication section configured to perform communication with the external device,
   a third storage section in which a private key and unique data of the robot are stored, and
   a second creation section configured to create, using the private key, a file for verification of the unique data of the robot, the unique data being subject to signature verification,
the external device includes
   a fourth communication section configured to perform communication with the third communication section,
   a fourth storage section in which a public key is stored, and
   a second verification section configured to perform signature verification,
the second verification section performs signature verification, using the public key, on the file for verification that is transmitted from the third communication section and that is received by the fourth communication section, and
the fourth communication section transmits, to the third communication section, the file for verification with a verified signature.

According to a still another aspect of the present disclosure, there is provided a robot system including:
a first robot control device configured to control actuation of a first robot;
a second robot control device configured to control actuation of a second robot; and
an external device configured to communicate with each of the first robot control device
and the second robot control device,
in which the first robot control device includes
   a fifth storage section in which unique data of the first robot is stored, and
   a fifth communication section configured to perform communication with the external device,
the second robot control device includes
   a sixth communication section configured to perform communication with the external device,
   a sixth storage section in which a public key is stored, and
   a third verification section configured to perform signature verification,
the external device includes
   a seventh communication section configured to perform communication with each of the fifth communication section and the sixth communication section,
   a seventh storage section in which a private key is stored, and
   a third creation section configured to create, using the private key, a file for verification of the unique data of the first robot, the unique data being received by the seventh communication section from the fifth communication section, and
the third verification section performs signature verification, using the public key, on the file for verification that is transmitted from the seventh communication section and that is received by the sixth communication section.

### BRIEF DESCRIPTION OF THE DRAWINGS

FIG. 1 is a schematic configuration diagram showing an overall configuration of a robot system according to a first embodiment of the present disclosure.
FIG. 2 is a block diagram of the robot system shown in FIG. 1.
FIG. 3 is a functional block diagram of a controller shown in FIG. 2.
FIG. 4 is a flowchart for describing an example of a control operation of the robot system shown in FIG. 1.
FIG. 5 is a schematic configuration diagram showing an overall configuration of a robot system according to a second embodiment of the present disclosure.
FIG. 6 is a flowchart for describing an example of a control operation of the robot system shown in FIG. 1.
FIG. 7 is a schematic configuration diagram showing an overall configuration of a robot system according to a third embodiment of the present disclosure.
FIG. 8 is a flowchart for describing an example of a control operation of the robot system shown in FIG. 1.

### DESCRIPTION OF EMBODIMENTS

### First embodiment

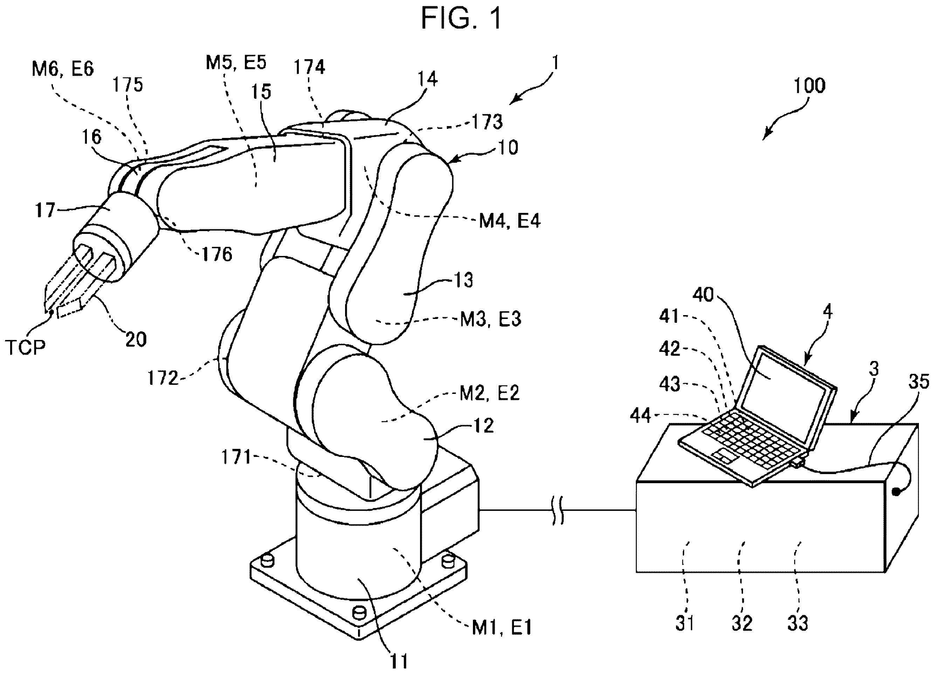

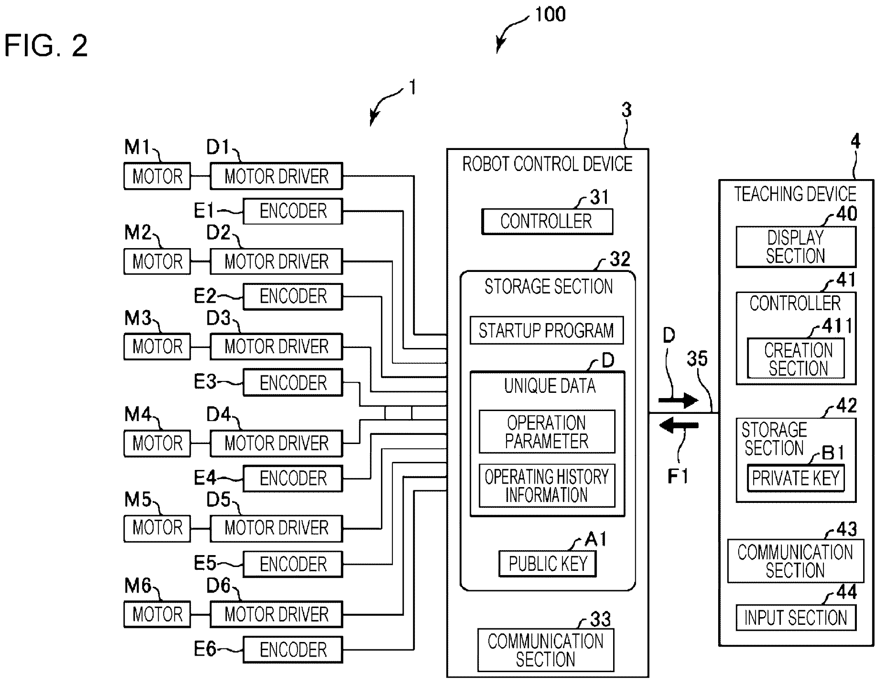

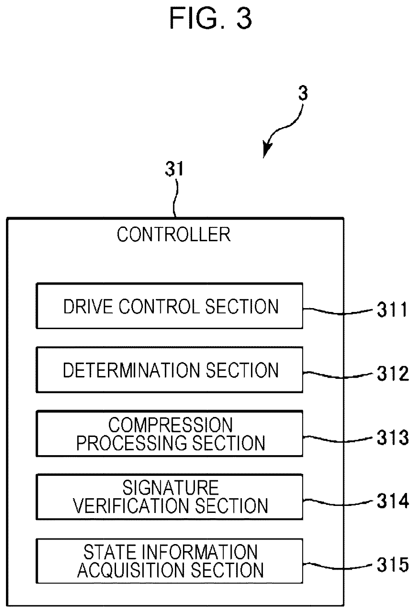

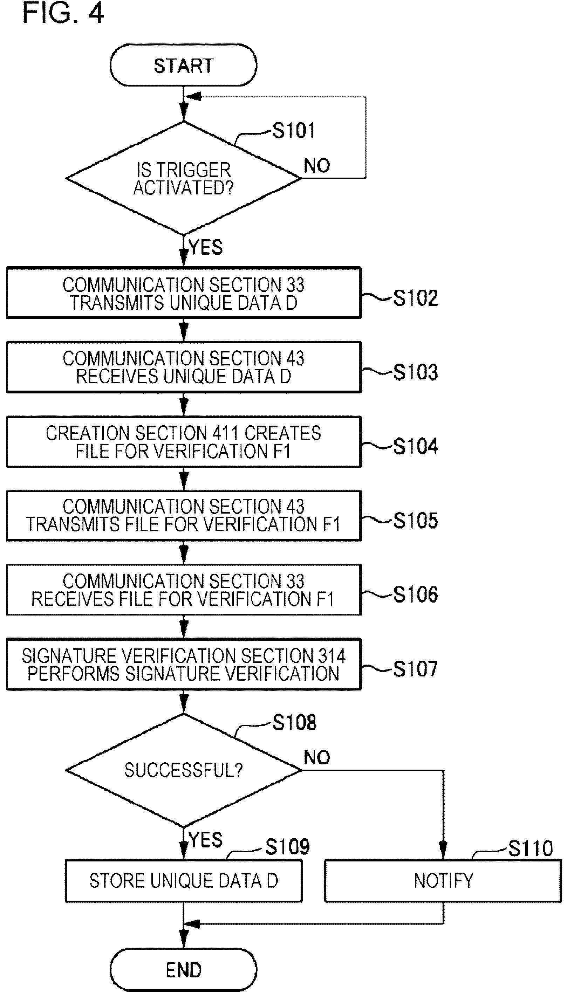

FIG. 1 is a schematic configuration diagram showing an overall configuration of a robot system according to a first embodiment of the present disclosure. FIG. 2 is a block diagram of the robot system shown in FIG. 1. FIG. 3 is a functional block diagram of a controller shown in FIG. 2. FIG. 4 is a flowchart for describing an example of a control operation of the robot system shown in FIG. 1.

Hereinafter, the robot system according to the present disclosure will be described in detail based on suitable embodiments shown in the accompanying drawings. It is noted that, hereinafter, for convenience of description, in the robot arm, the base 11 side in FIG. 1 will be referred to as a "base end", and the opposite side, that is, the end effector 20 side will be referred to as a "distal end".

As shown in FIG. 1, a robot system 100 includes a robot 1, a robot control device 3 that controls an actuation of the robot 1, and a teaching device 4 that is an example of an external device.

First, the robot 1 will be described.

As shown in FIG. 1, the robot 1 is a single-arm 6-axis vertical articulated robot in the present embodiment, and includes a base 11 and a robot arm 10 that is rotatably installed on the base 11. In addition, an end effector 20 can be mounted on a distal end portion of the robot arm 10. The end effector 20 may be or may not be a constituent requirement of the robot 1.

In addition, the robot 1 is not limited to the illustrated configuration, and may be, for example, a dual-arm articulated robot, a horizontal articulated robot (a SCARA robot), or a mobile robot.

The base 11 is a support that supports the robot arm 10 from a lower side in FIG. 1, and is fixed to, for example, a floor in a factory. In the robot 1, the base 11 is electrically coupled to the robot control device 3 through a relay cable. In addition, the connection between the robot 1 and the robot control device 3 is not limited to the wired connection as in the configuration shown in FIG. 1, and may be, for example, a wireless connection for all or a part thereof, or may be connected through a network such as the Internet.

In the present embodiment, the robot arm 10 includes a first arm 12, a second arm 13, a third arm 14, a fourth arm 15, a fifth arm 16, and a sixth arm 17, and these arms are coupled in this order from the base 11 side. It is noted that the number of arms included in the robot arm 10 is not limited to six, and may be, for example, one, two, three, four, five, or seven or more. In addition, the size of each arm, such as the total length, is not particularly limited, and can be appropriately set.

The base 11 and the first arm 12 are coupled to each other through a joint 171. The first arm 12 is rotatable about a first rotation axis parallel to the vertical direction as a rotation center with respect to the base 11. The first rotation axis matches a normal line of the floor on which the base 11 is fixed.

The first arm 12 and the second arm 13 are coupled to each other through a joint 172. The second arm 13 is rotatable about a second rotation axis parallel to the horizontal direction as a rotation center with respect to the first arm 12. The second rotation axis is parallel to an axis orthogonal to the first rotation axis.

The second arm 13 and the third arm 14 are coupled to each other through a joint 173. The third arm 14 is rotatable about a third rotation axis parallel to the horizontal direction as a rotation center with respect to the second arm 13. The third rotation axis is parallel to the second rotation axis.

The third arm 14 and the fourth arm 15 are coupled to each other through a joint 174. The fourth arm 15 is rotatable about a fourth rotation axis parallel to a central axis direction of the third arm 14 as a rotation center with respect to the third arm 14. The fourth rotation axis is orthogonal to the third rotation axis.

The fourth arm 15 and the fifth arm 16 are coupled to each other through a joint 175. The fifth arm 16 is rotatable about a fifth rotation axis as a rotation center with respect to the fourth arm 15. The fifth rotation axis is orthogonal to the fourth rotation axis.

The fifth arm 16 and the sixth arm 17 are coupled to each other through a joint 176. The sixth arm 17 is rotatable about a sixth rotation axis as a rotation center with respect to the fifth arm 16. The sixth rotation axis is orthogonal to the fifth rotation axis.

In addition, the sixth arm 17 is a robot distal end portion that is located on the most distal end side in the robot arm 10. The sixth arm 17 can rotate together with the end effector 20 by driving the robot arm 10.

The robot 1 includes a motor M1, a motor M2, a motor M3, a motor M4, a motor M5, and a motor M6 as driving sections, and an encoder E1, an encoder E2, an encoder E3, an encoder E4, an encoder E5, and an encoder E6. The motor M1 is built into the joint 171, and relatively rotates the base 11 and the first arm 12. The motor M2 is built into the joint 172, and relatively rotates the first arm 12 and the second arm 13. The motor M3 is built into the joint 173, and relatively rotates the second arm 13 and the third arm 14. The motor M4 is built into the joint 174, and relatively rotates the third arm 14 and the fourth arm 15. The motor M5 is built into the joint 175, and relatively rotates the fourth arm 15 and the fifth arm 16. The motor M6 is built into the joint 176, and relatively rotates the fifth arm 16 and the sixth arm 17.

In addition, the encoder E1 is built into the joint 171, and detects the position of the motor M1. The encoder E2 is built into the joint 172, and detects the position of the motor M2. The encoder E3 is built into the joint 173, and detects the position of the motor M3. The encoder E4 is built into the joint 174, and detects the position of the motor M4. The encoder E5 is built into the fifth arm 16, and detects the position of the motor M5. The encoder E6 is built into the sixth arm 17, and detects the position of the motor M6.

The encoder E1 to the encoder E6 are electrically coupled to the robot control device 3, and position information of the motor M1 to the motor M6, that is, the rotation amount is transmitted to the robot control device 3 as an electric signal. Then, based on this information, the robot control device 3 drives the motor M1 to the motor M6 through the motor driver D1 to the motor driver D6 as shown in FIG. 2. That is, controlling the robot arm 10 is controlling the motor M1 to the motor M6.

The end effector 20 can be attachably and detachably mounted on the distal end portion of the robot arm 10. In the present embodiment, the end effector 20 is configured as a hand that includes a pair of claw portions that can approach and separate from each other, and that grips and releases a work by each claw portion. It is noted that the end effector 20 is not limited to the illustrated configuration, and may be a hand that grips a workpiece (a work or a tool) by suction. In addition, the end effector 20 may be, for example, a polishing machine, a grinding machine, a cutting machine, a coating device, a spray gun, or a tool such as a driver or a wrench.

The robot 1 operates the robot arm 10 as desired using such an end effector 20, and performs various operations such as transport, manufacturing, processing, assembly, and painting of a workpiece.

In addition, a control point TCP is set at the distal end of the end effector 20. In the robot system 100, by grasping the position of the control point TCP, the control point TCP can be used as a control reference.

Next, the teaching device 4 will be described.

As shown in FIGS. 1 and 2, the teaching device 4 is an example of an external device that communicates with the robot control device 3.

The robot control device 3 and the teaching device 4 are connected to each other by a signal line 35. More specifically, the communication section 33 (first communication section) of the robot control device 3 and the communication section 43 (second communication section) of the teaching device 4 are connected to each other by the signal line 35. In this case, the connection is not limited to the case where the robot control device 3 and the teaching device 4 are connected to each other by the wired signal line 35 as shown in FIG. 1, and may be, for example, a wireless connection for all or a part thereof, or may be connected through a network such as the Internet.

As shown in FIGS. 1 and 2, the teaching device 4 includes a display section 40 and an input section 44, and can create and input an operation program to the robot arm 10 by operating the input section 44. The teaching device 4 is not particularly limited, and examples thereof include a desktop or laptop personal computer, a tablet terminal, a smartphone, a teaching pendant, and the like.

Specifically, the teaching device 4 includes the display section 40, a controller 41, a storage section 42, the communication section 43, and the input section 44.

The display section 40 is configured by, for example, a liquid crystal display or an organic EL display. The display section 40 may constitute a notification section described below.

The controller 41 is configured by, for example, a central processing unit (CPU), and reads out various programs such as a teaching program stored in the storage section 42.

The controller 41 includes a creation section 411 (first creation section) as a functional section. The creation section 411 creates a file F1 for verification of unique data stored in the storage section 42, specifically, unique data D that is subject to signature verification. The unique data D is transmitted from the robot control device 3 as described below.

The "creation of the file for verification that is subject to signature verification" refers to encrypting, using a private key B1 stored in the storage section 42 as the private key, a hash value of predetermined data or a predetermined program. That is, the file F1 for verification is obtained by encrypting predetermined data or a predetermined program.

The storage section 42 includes, for example, a volatile memory such as a random access memory (RAM) and a non-volatile memory such as a read only memory (ROM), and stores the various programs. As will be described below, the storage section 42 is a second storage section in which the private key B1 is stored. The private key B1 is data used for encrypting the hash value of the predetermined data or the predetermined program.

The communication section 43 transmits and receives signals and data to and from the robot control device 3 using, for example, an external interface such as a wired local area network (LAN) or a wireless LAN. As will be described below, the communication section 43 is a second communication section that receives the unique data D transmitted from the communication section 33 of the robot control device 3 and transmits the file F1 for verification to the communication section 33.

The creation section 411 may immediately create the file F1 for verification in a case where the communication section 43 receives the unique data D, or may store the unique data D in the storage section 42 in a case where the communication section 43 receives the unique data D, and create the file F1 for verification in a case where the robot control device 3 requests the unique data D.

The input section 44 is configured by a keyboard, a mouse, connectors, an external connection terminal, and the like, and the user can input or select desired information by operating, for example, the keyboard or the mouse.

In a case where the display section 40 is configured by a touch panel type liquid crystal display, desired information can be input by touching a display surface of the display section 40 with a finger, a touch pen, or the like. In this case, the display section 40 also serves as the input section 44.

Next, the robot control device 3 will be described.

As shown in FIGS. 1, 2, and 3, the robot control device 3 has a function of controlling the actuation of the robot 1, acquiring and storing an operating history of the robot 1, and the like.

As shown in FIG. 1, in the present embodiment, the robot control device 3 is installed at a position away from the robot 1. However, the robot control device 3 is not limited to this configuration, and for example, may be built into the base 11 of the robot 1.

As shown in FIG. 2, the robot control device 3 includes a controller 31, a storage section 32, and a communication section 33. These sections are communicably connected to each other through, for example, a bus.

The controller 31 is configured by, for example, at least one central processing unit (CPU), and reads out and executes various programs such as an operation program stored in the storage section 32. The signal generated by the controller 31 is transmitted to each section of the robot 1 through the communication section 33. As a result, the robot arm 10 can execute a predetermined operation under predetermined conditions.

In addition, the controller 31 has various functions such as a function of performing signature verification as will be described below. This point will be described in detail below.

The communication section 33 transmits and receives signals and data to and from the teaching device 4 using, for example, an external interface such as a wired local area network (LAN) or a wireless LAN. The communication section 33 is a first communication section that transmits the unique data D to the teaching device 4 or receives the file F1 for verification from the teaching device 4.

The storage section 32 stores various programs and the like that can be executed by the controller 31. In addition, as will be described below, the storage section 32 stores a data compression processing program for processing of compressing the unique data by a compression processing section 313.

Examples of the storage section 32 include a volatile memory such as a RAM, a non-volatile memory such as a ROM, a hard disk, and a detachable external storage device.

As shown in FIG. 3, various data such as a public key A1 and robot information are stored in the storage section 32.

The public key A1 is data used for decrypting, using the private key B1 stored in the storage section 42, encrypted data or a program.

The robot information is information related to the robot 1, and includes a startup program and an operation program as various programs, and operation parameters of the robot 1 and an operating history of the robot as various data. The operation program, the operation parameters of the robot 1, and the operating history of the robot 1 are unique data that are different for each individual robot. That is, the unique data is data that changes by the user operating the robot control device 3 after shipment.

The startup program is a program for starting the system of the robot control device 3. Examples of the startup program include a boot program, a basic input/output system (BIOS), a loader, a kernel, a native program, a Java (registered trademark) program, and the like. The startup program is data that basically does not change after shipment, and is data that does not change for each individual robot control device 3. In the present embodiment, the startup program is data that is not included in the unique data.

The operation program includes a program indicating various conditions in a case of driving the robot 1, such as a path of the control point TCP of the robot 1, a posture of the robot arm 10 over time, and speed information of the control point TCP. Each of these is the operation program.

The operation parameter includes a force control parameter of the robot arm 10, such as a mass coefficient, a viscosity coefficient, and an elastic coefficient, and settings of peripheral devices such as a camera and a sensor (not shown).

The operating history includes information on a change in the posture of the robot arm 10 over time, information on the progress of the work, information on the date and time when an error occurs, and the like.

The operation program, the operation parameter, and the operating history can be rewritten by the controller 31 at a predetermined timing. The operation program and the operation parameter can be input, selected, or changed (rewritten) by the user by operating the input section 44 of the teaching device 4, for example. The operating history is newly accumulated each time the robot 1 is operated, and can be acquired from the robot 1 in real time or at a predetermined time interval.

The robot information and the public key A1 may be stored in the same memory or different memories among the memories included in the storage section 32, but it is preferable that the public key A1 and the robot information are stored in different memories. As a result, even in a case where the data of the robot information is damaged, the public key A1 can be prevented from being damaged, and the encryption and the decryption can be more reliably performed.

Next, the controller 31 will be described.

As shown in FIG. 3, the controller 31 includes a drive control section 311, a determination section 312, a compression processing section 313, a signature verification section 314, and a state information acquisition section 315 as functional sections.

In addition, each functional section may be regarded as a different processor, or may be regarded as different cores in one processor.

The drive control section 311 reads out and executes the operation program stored in the storage section 32. That is, the drive control section 311 controls the energization conditions of the motor M1 to the motor M6 in accordance with the operation program.

The determination section 312 determines whether or not a trigger for transmitting the unique data D to the communication section 43 is activated. Examples of the trigger include a case where the robot control device 3 receives a backup instruction, a case where the operation program of the robot 1 or the operation parameter of the robot 1 is changed, a case where a predetermined time has elapsed, a case where a predetermined time has elapsed since the previous transmission of the unique data D (transmitted at a predetermined time interval), and the like.

In a case where the determination section 312 is configured to determine that the trigger is activated when the robot control device 3 receives the backup instruction, the user can transmit the unique data D to the communication section 43 at a desired timing in a case where the user wants to perform the backup, and thus the convenience is excellent.

In a case where the determination section 312 is configured to determine that the trigger is activated when the operation program of the robot 1 or the operation parameter of the robot 1 is changed, the unique data D can be automatically transmitted to the communication section 43 in a case where the operation program of the robot 1 or the operation parameter of the robot 1 is changed, and thus the convenience is excellent.

In a case where the determination section 312 is configured to determine that the trigger is activated when a predetermined time has elapsed since the previous transmission of the unique data D, that is, in a case where the communication section 33 is configured to transmit the unique data D to the communication section 43 at a predetermined time interval, the user can perform the backup even in a case where the user forgets to transmit the backup instruction.

The determination section 312 performs the determination based on the information acquired by the state information acquisition section 315 described below.

The compression processing section 313 has a function of performing compression processing of compressing desired unique data based on the data compression processing program stored in the storage section 32. As a result, in a case of transmitting and receiving the unique data, the communication can be accelerated, and the load on the communication can be reduced. A method of the compression processing performed by the compression processing section 313 is not particularly limited, and examples thereof include ZIP, TAR, CAB, 7z, RAR, and the like.

The compression processing section 313 can appropriately select which data among the unique data is compressed and which data is not compressed. Preferred examples thereof include a case where the compression processing section 313 compresses the data of the operation program of the robot 1 and the data of the operation parameter of the robot, and does not compress the data of the operating history of the robot 1. The data of the operating history of the robot 1 is text data, and the data capacity is relatively small. Therefore, by compressing the operation program of the robot 1 and the operation parameter of the robot 1, which have a relatively large capacity, and not compressing the data of the operating history of the robot 1, it is possible to balance both the reduction in time for compression, the acceleration of the communication speed, and the reduction of the load on the communication.

The communication section 33 transmits the file for verification to the teaching device 4 in a state of being signed in the compressed file created by the compression processing section 313. As a result, the calculation time of the hash value can be reduced.

In addition, since the operating history of the robot 1 may be confirmed on the teaching device 4 as the backup destination, by handling the operating history of the robot 1 as a separate file without including the operating history of the robot 1 in the verification file, convenience is improved. By handling the verification file for compressing the data of the operating history of the robot 1 as a separate file, the processing of decompressing the compressed file can be omitted, and thus the analysis of the operating history of the robot 1 can be started urgently.

It is noted that the compression processing section 313 may have a function of decompressing the compressed data.

The signature verification section 314 has a function of performing, using the public key A1, the signature verification on the received file F1 for verification.

The "performing the signature verification" refers to verifying whether a first hash value obtained by applying a hash function to the unique data and a second hash value obtained by decrypting, using the public key A1, the electronic signature for the unique data match each other.

In a case where the signature verification of the received file F1 for verification is successful, the signature verification section 314 can read out and execute the data or the program. On the other hand, in a case where the signature verification of the file F1 for verification is unsuccessful, the data or the program cannot be read out or executed. However, the data or the program may be configured to be readable and executable even in a case where the signature verification is unsuccessful. In this case, it is preferable to notify of the failure of the signature verification or to store the fact that the signature verification has failed in the storage section 32.

More specifically, the "signature verification is successful" refers to a case where the first hash value and the second hash value are compared and both have the same value. In a case where the signature verification is successful, the program is not tampered with, and the robot control device 3 can be started with high safety, and the robot 1 can be safely driven.

The "signature verification is unsuccessful" refers to a case where the first hash value and the second hash value are compared and both have different values. In a case where the signature verification is unsuccessful, the program may be tampered with or the program may be in an inappropriate or incomplete state. Therefore, the safety of the start of the robot control device 3 is not ensured, and the safety of the driving of the robot 1 is not ensured.

The state information acquisition section 315 has a function of acquiring information on the state of the robot control device 3. The information acquired by the state information acquisition section 315 is used as a trigger for transmitting the unique data D. Examples of the information acquired by the state information acquisition section 315 include information on a status of the robot control device 3, such as switching of the power ON and OFF, information on whether the data in the storage section 32 is in a normal state or a damaged state, information on whether there is a backup request, and information on whether an instruction to restore to the state at the time of the previous creation of the file for verification is received or the elapsed time after the power is turned on. In a case where the state information acquisition section 315 acquires such information, the determination section 312 performs the determination as described above.

In such a robot system 100, the communication section 33 transmits the unique data D stored in the storage section 32 to the teaching device 4 at a predetermined timing. In a case where the communication section 43 of the teaching device 4 receives the unique data D, the storage section 42 stores the unique data D. Next, for example, in a case where the teaching device 4 receives an instruction to create the file F1 for verification and transmit the file F1 for verification to the robot control device 3, the creation section 411 creates the file F1 for verification of the unique data D and transmits the file F1 for verification to the robot control device 3. Then, the signature verification section 314 performs the signature verification, using the public key A1 stored in the storage section 32, on the file F1 for verification transmitted from the communication section 43 and received by the communication section 33. That is, the signature verification section 314 performs the signature verification, using the public key A1, on the file F1 for verification created by the creation section 411, transmitted from the communication section 43, and received by the communication section 33.

In a case where the signature verification is successful, the file F1 for verification is decrypted, and the data compressed as necessary (hereinafter, may be simply referred to as "compressed data") is decompressed, and the program is executed or stored in the storage section 32.

It is noted that the decompression of the compressed data in the robot control device 3 can be performed by any of the compression processing section 313 or the signature verification section 314.

According to such a configuration, in the robot system 100, the robot control device 3 transmits the unique data D to the teaching device 4, and the robot control device 3 receives the file F1 for verification of the unique data as necessary. As a result, the unique data D of the robot control device 3 can be stored in the teaching device 4, and the unique data D can be restored even in a case where the storage section 32 of the robot control device 3 is broken down. In addition, even in a case where the program of the file F1 for verification is tampered with from the outside during storage in the teaching device 4, signature verification is performed on the file F2 for verification on the robot control device 3 side. As a result, it is possible to prevent the erroneous execution or storage (overwriting) of the tampered program in the storage section 32. Therefore, the safety of the operation of the robot 1 can be improved.

In the robot system 100 according to the present embodiment, the public key A1 is stored in the robot control device 3, and the private key B1 is stored in the teaching device 4. That is, in the robot system 100, the public key A1 and the private key B1 are stored in separate devices. As a result, the safety (security robustness) can be improved.

As described above, with the robot system 100, the safety of the operation of the robot 1 and the security robustness can be improved.

As described above, the robot system 100 includes the robot control device 3 that controls the actuation of the robot 1, and the teaching device 4 that is an example of an external device that communicates with the robot control device 3. The robot control device 3 includes the drive control section 311 that controls the actuation of the robot 1, the communication section 33 as the first communication section that communicates with the teaching device 4, the storage section 32 as the first storage section that stores the public key A1 and the unique data D of the robot 1, and the signature verification section 314 as the first verification section that performs the signature verification. The teaching device 4 includes the communication section 43 as the second communication section that communicates with the communication section 33, the storage section 42 as the second storage section that stores the private key B1, and the creation section 411 as the first creation section that creates, using the private key B1, the file F1 for verification of the unique data D of the robot 1, which is subject to signature verification and is received by the communication section 43 from the communication section 33. The first verification section performs the signature verification, using the public key A1, on the file F1 for verification transmitted from the communication section 43 and received by the communication section 33. With the robot system 100, the safety of the operation of the robot 1 and the security robustness can be improved.

The unique data of the robot 1 includes at least one (three in the present embodiment) of the operation program of the robot 1, the operation parameter of the robot 1, or the operating history information of the robot 1. As a result, the file F1 for verification of the operation program of the robot 1, the operation parameter of the robot 1, and the operating history of the robot 1 can be created, and the safety can be further improved.

The communication section 33 as the first communication section transmits at least a part of the unique data in a compressed form to the communication section 43 as the second communication section. As a result, it is possible to achieve acceleration of communication, and the load on the communication can be reduced.

The unique data of the robot 1 includes the operation program of the robot 1, the operation parameter of the robot 1, and the operating history information of the robot 1, and the communication section 33 as the first communication section transmits the data of the operation program of the robot 1 and the operation parameter of the robot in a compressed form to the communication section 43 as the second communication section, and transmits the data of the operating history of the robot 1 as a separate file to the communication section 43 without compression. As a result, it is possible to balance both the reduction in time for compression, the acceleration of the communication speed, and the reduction of the load on the communication.

It is noted that all of the operation program of the robot 1, the operation parameter of the robot 1, and the operating history of the robot 1 may be compressed, or all of the operation program of the robot 1, the operation parameter of the robot 1, and the operating history of the robot 1 may not be compressed.

The robot control device 3 includes the determination section 312 that determines whether or not the trigger for transmitting the unique data D to the communication section 43 as the second communication section is activated, and it is preferable that the determination section 312 determines that the trigger is activated in a case where the backup instruction is received. As a result, in a case where the user wants to perform the backup, the user can transmit the unique data D to the communication section 43 at a desired timing, and thus the convenience is excellent.

The unique data of the robot 1 includes the operation program of the robot 1 and the operation parameter of the robot 1, the robot control device 3 includes the determination section 312 that determines whether or not the trigger for transmitting the unique data D to the communication section 43 as the second communication section is activated, and it is preferable that the determination section 312 determines that the trigger is activated in a case where the operation program of the robot 1 or the operation parameter of the robot 1 is changed. As a result, in a case where the operation program of the robot 1 or the operation parameter of the robot 1 is changed, the unique data D can be automatically transmitted to the communication section 43, and thus the convenience is excellent.

It is preferable that the communication section 33 as the first communication section transmits the unique data D to the communication section 43 as the second communication section at a predetermined time interval. As a result, the user can perform the backup even in a case where the user forgets to transmit the backup instruction.

The interval for transmitting the unique data D may be configured to be appropriately set by the user.

In addition, the creation section 411 of the teaching device 4 may be configured to immediately create the file F1 for verification in a case where the unique data D is received, or may be configured to store the unique data D in the storage section 42 once, and create and transmit the file F1 for verification at a timing when a predetermined event occurs. The predetermined event is as exemplified above.

It is noted that in the related art, the signature verification of the program for starting the robot control device is performed. The program for starting basically does not change after the robot control device is shipped and reaches the user. Therefore, even in a case where the program for starting is not backed up to the teaching device, the robot control device can be restored by returning the robot control device to the state at the time of shipment. However, the file for verification that is subject to signature verification in the present embodiment is unique data in which the contents of the data are different for each individual robot control device 3. That is, the unique data changes after the robot control device 3 is shipped and reaches the user. Therefore, it is difficult to restore the state unless the backup data is stored somewhere. The present example is particularly effective in a case where the file that is subject to signature verification is mainly the unique data and the robot control device 3 is restored to the previous state.

Next, a control operation (signature verification method) of the robot system 100 will be described with reference to a flowchart shown in FIG. 4.

First, in Step S101, it is determined whether or not the trigger for creating the file F1 for verification is activated. That is, in a case where the state information acquisition section 315 acquires the information on the state of the robot control device 3, the trigger is regarded as being activated. The information on the state of the robot control device 3 is as described above.

In Step S101, in a case where it is determined that the trigger is activated (S101: YES), the process proceeds to Step S102. In Step S101, in a case where it is determined that the trigger is not activated (S101: NO), Step S101 is repeatedly executed until it is determined that the trigger is activated.

Next, in Step S102, the communication section 33 of the robot control device 3 transmits the unique data D to the communication section 43 of the teaching device 4, and in Step S103, the communication section 43 receives the unique data D. The unique data D transmitted by the communication section 33 includes the compressed data compressed by the compression processing section 313.

Next, in Step S104, the creation section 411 creates, using the private key B1 stored in the storage section 42, the file F1 for verification of the unique data D that is subject to signature verification.

Then, for example, in a case where the user inputs a backup request instruction (transmission instruction) to the teaching device 4, in Step S105, the communication section 43 of the teaching device 4 transmits the file F1 for verification to the communication section 33 of the robot control device 3, and in Step S106, the communication section 33 receives the file F1 for verification. The file F1 for verification transmitted by the communication section 43 includes the compressed data.

Next, in Step S107, the signature verification section 314 performs the signature verification, using the public key A1 stored in the storage section 32, on the file F1 for verification transmitted from the communication section 43 and received by the communication section 33.

Next, in Step S108, it is determined whether or not the signature verification is successful. The determination in this step is performed by the signature verification section 314. In Step S108, in a case where it is determined that the signature verification is successful (S108: YES), in Step S109, the unique data D is stored in the storage section 32. The storage may be overwriting (updating of data), or may be storing the new unique data D while leaving the old unique data.

In Step S108, in a case where it is determined that the signature verification is unsuccessful (S108: NO), in Step S110, a notification is performed by a notification section (not shown). The notification section may be provided in the robot control device 3, may be provided in the teaching device 4 such as the display section 40, or may be provided in another device. In addition, the notification method may be a method using a voice, a visual method using a display section such as the display section 40, an LED, a lamp, or the like, a method using vibration with a vibrator, or a method combining two or more of these methods.

Although not shown, in Step S109, in a case where the unique data is stored in the storage section 32, the notification section may be configured to notify of the fact.

The robot control device 3 or the robot system 100 including the robot control device 3, which are as described above, can provide a signature verification method executed by the robot control device 3 including the first storage section that stores the public key A1 and the unique data D of the robot 1, and the teaching device 4 (external device) including the second storage section that stores the private key B1, the signature verification method including
a first communication step of transmitting the unique data D from the robot control device 3 to the teaching device 4,
a first creation step of creating, using the private key B1, the file F1 for verification of the unique data that is subject to signature verification in the teaching device 4
a second communication step of transmitting the file F1 for verification from the teaching device 4 to the robot control device 3, and
a signature verification step of performing the signature verification, using the public key A1, on the file F2 for verification received from the teaching device 4 in the robot control device 3.

Any other step may be added before and after each step, specifically, before and after each step in Steps S101 to S110.

With such a signature verification method, the safety and the security robustness in a case where the robot 1 is operated can be improved as in the effect of the robot system 100 described above.

### Second embodiment

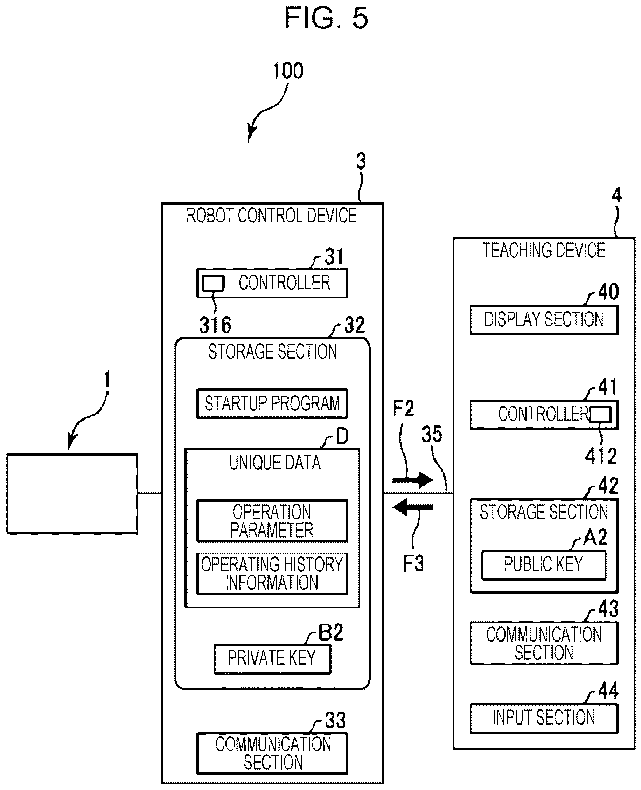

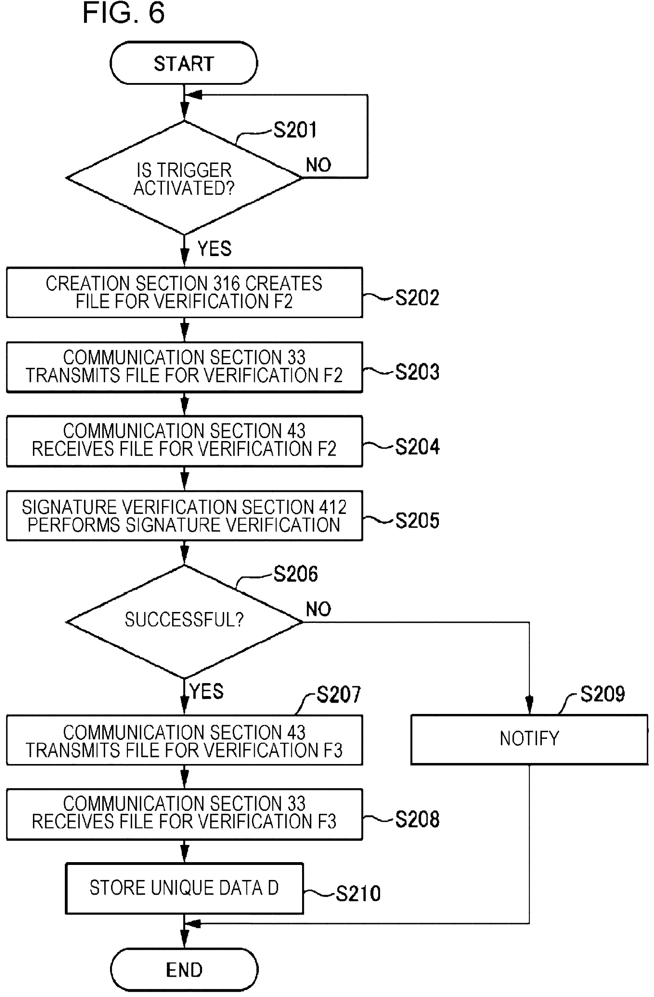

FIG. 5 is a schematic configuration diagram showing an overall configuration of a robot system according to a second embodiment of the present disclosure. FIG. 6 is a flowchart for describing an example of a control operation of the robot system shown in FIG. 1.

Hereinafter, a second embodiment of the robot system according to the present disclosure will be described with reference to FIGS. 5 and 6, but the description will be focused on differences from the first embodiment, and the same matters will not be described.

The robot system 100 according to the present embodiment includes the robot 1, the robot control device 3, and the teaching device 4 as in the first embodiment.

As shown in FIG. 5, the controller 31 of the robot control device 3 does not include the signature verification section 314 of the first embodiment, and includes a creation section 316 as a second creation section. The main function of the creation section 316 is the same as that of the creation section 411 described in the first embodiment.

The controller 41 of the teaching device 4 does not include the creation section 411 of the first embodiment, and includes a signature verification section 412 as a second verification section.

In addition, in the present embodiment, the public key A2 is stored in the storage section 42 (fourth storage section) of the teaching device 4, and the private key B2 is stored in the storage section 32 (third storage section) of the robot control device 3.

In such a robot system 100, the creation section 316 of the robot control device 3 creates the file F2 for verification of the unique data D at a predetermined timing, the communication section 33 transmits the file F2 for verification to the teaching device 4, and the signature verification section 412 of the teaching device 4 performs the signature verification. Then, in a case where the signature verification is successful, the teaching device 4 transmits (outputs) the file F3 for verification with a verified signature to the robot control device 3 as necessary, and the robot control device 3 stores the file F3 for verification with a verified signature in the storage section 32. According to such a configuration, the unique data D of the robot control device 3 can be stored in the teaching device 4 as the file F2 for verification, and the unique data D can be restored even in a case where the storage section 32 of the robot control device 3 is broken down. Therefore, it is possible to prevent the erroneous execution or storage (overwriting) of the tampered program in the storage section 32. As a result, the safety of the operation of the robot 1 can be improved.

In the robot system 100 according to the present embodiment, the private key B2 is stored in the robot control device 3, and the public key A2 is stored in the teaching device 4. That is, in the robot system 100, the public key A2 and the private key B2 are stored in separate devices. As a result, the safety (security robustness) can be improved.

As described above, with the robot system 100, the safety of the operation of the robot 1 and the security robustness can be improved.

As described above, the robot system 100 according to the present embodiment includes the robot 1, the robot control device 3 that controls the actuation of the robot 1, and the teaching device 4 that is an example of an external device that communicates with the robot control device 3. The robot control device 3 includes the drive control section 311 that controls the actuation of the robot 1, the communication section 33 as the third communication section that communicates with the teaching device 4, the storage section 32 as the third storage section that stores the private key B2 and the unique data of the robot 1, and the creation section 316 as the second creation section that creates, using the private key B2, the file 2 for verification of the unique data of the robot 1 that is subject to signature verification. The teaching device 4 includes the communication section 43 as the fourth communication section that communicates with the communication section 33, the storage section 42 as the fourth storage section that stores the public key A2, and the signature verification section 412 as the second verification section that performs the signature verification. The signature verification section 412 performs the signature verification, using the public key A2, on the file F2 for verification transmitted from the communication section 33 and received by the communication section 43, and the communication section 43 transmits the file F3 for verification with a verified signature to the communication section 33. With the robot system 100, the safety of the operation of the robot 1 and the security robustness can be improved.

In the present embodiment, the case where the communication section 43 outputs (transmits) the file F3 for verification with a verified signature to the robot control device 3 is described, but the present disclosure is not limited to this, and the file F3 for verification with a verified signature may be output (transmitted) to another device, for example, a robot control device other than the robot control device 3, a teaching device other than the teaching device 4, or the like.

Next, a control operation (signature verification method) of the robot system 100 according to the present embodiment will be described with reference to a flowchart shown in FIG. 6.

First, in Step S201, it is determined whether or not the trigger for creating the file F1 for verification is activated. That is, in a case where the state information acquisition section 315 acquires the information on the state of the robot control device 3, the trigger is regarded as being activated. The information on the state of the robot control device 3 is as described above.

In Step S201, in a case where it is determined that the trigger is activated (S201: YES), the process proceeds to Step S202. In Step S201, in a case where it is determined that the trigger is not activated (S201: NO), Step S201 is repeatedly executed until it is determined that the trigger is activated.

Next, in Step S202, the creation section 316 of the robot control device 3 creates, using the private key B2 stored in the storage section 32, the file F2 for verification of the unique data D, and stores the file F2 for verification in the storage section 32. Next, in Step S203, the communication section 33 transmits the file F2 for verification to the communication section 43 of the teaching device 4, and in Step S204, the communication section 43 receives the file F2 for verification. The file F2 for verification transmitted by the communication section 33 includes the compressed data compressed by the compression processing section 313. The file F2 for verification is stored in the storage section 42 of the teaching device 4.

Then, for example, in a case where the user inputs a backup request instruction (transmission instruction) to the teaching device 4, in Step S205, the signature verification section 412 of the teaching device 4 performs the signature verification using the public key A2 stored in the storage section 42.

Next, in Step S206, it is determined whether or not the signature verification is successful. The determination in this step is performed by the signature verification section 412. In Step S206, in a case where it is determined that the signature verification is successful (S206: YES), in Step S207, the communication section 43 of the teaching device 4 transmits the file F3 for verification with a verified signature to the communication section 33 of the robot control device 3, and in Step S208, the communication section 33 receives the file F3 for verification. The file F3 for verification transmitted by the communication section 43 includes the compressed data.

Next, in Step S210, the file F3 for verification is decompressed, and the unique data D is stored in the storage section 32. The storage may be overwriting (updating of data), or may be storing the new unique data D while leaving the old unique data.

On the other hand, in Step S206, in a case where it is determined that the signature verification is unsuccessful (S206: NO), in Step S209, a notification is performed by a notification section (not shown). The notification is the same as that in the first embodiment, and thus the description thereof will be omitted.

The robot control device 3 described above and the robot system 100 including the robot control device 3 can provide
a signature verification method executed by the robot control device 3 including the third storage section that stores the private key B2 and the unique data D of the robot 1, and the teaching device 4 (external device) including the fourth storage section that stores the public key A2, the signature verification method including:
a second creation step of creating, using the private key B2, the file F2 for verification of the unique data that is subject to signature verification by the robot control device 3,
a third communication step of transmitting, to the teaching device 4, the file F2 for verification by the robot control device 3,
a second signature verification step of performing the signature verification, using the public key A2, the file F2 for verification by the teaching device 4, and
a fourth communication step of transmitting, to the robot control device 3, the file F3 for verification with a verified signature by the teaching device 4.

Any other step may be added before and after each step, specifically, before and after each step in Steps S201 to S210.

With such a signature verification method, the safety and the security robustness in a case where the robot 1 is operated can be improved as in the effect of the robot system 100 described above.

### Third embodiment

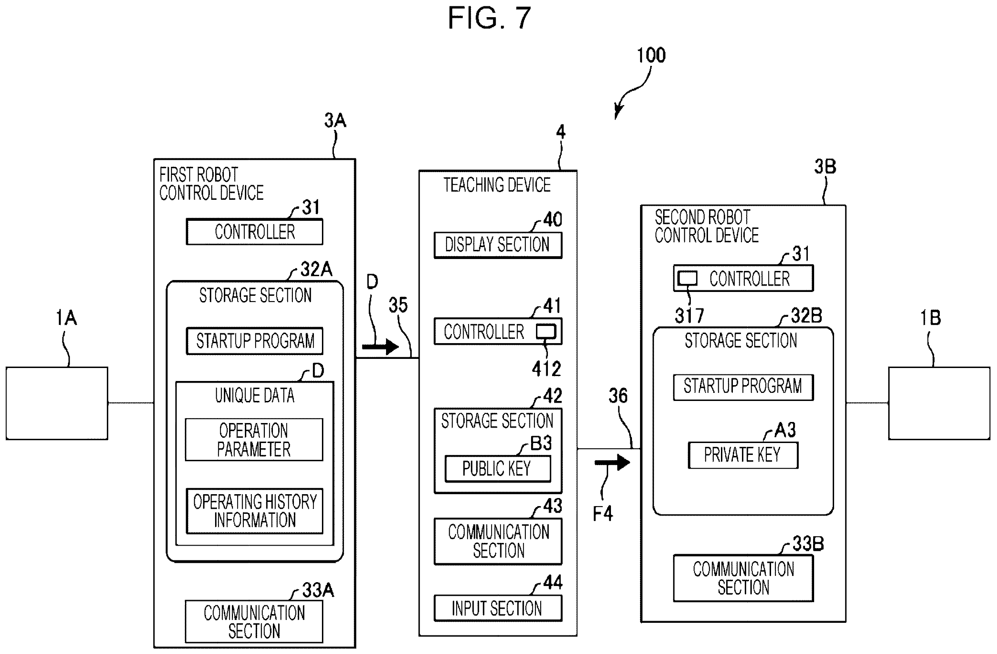

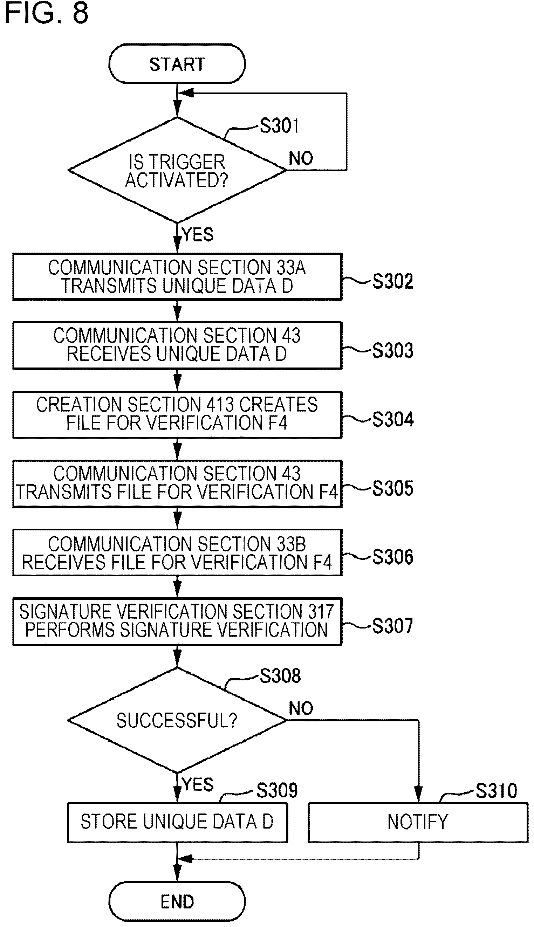

FIG. 7 is a schematic configuration diagram showing an overall configuration of a robot system according to a third embodiment of the present disclosure. FIG. 8 is a flowchart for describing an example of a control operation of the robot system shown in FIG. 1.

Hereinafter, a third embodiment of the robot system according to the present disclosure will be described with reference to FIGS. 7 and 8, but the description will be focused on differences from each embodiment, and the same matters will not be described.

As shown in FIG. 7, the robot system 100 according to the present embodiment includes a first robot 1A, a second robot 1B that is different from (separate from) the first robot 1A, a first robot control device 3A that controls an actuation of the first robot 1A, a teaching device 4, and a second robot control device 3B that controls an actuation of the second robot 1B. The first robot control device 3A and the second robot control device 3B have the same configuration as the robot control device 3 described in the above-described embodiment, except that the presence or absence of functional sections described below is different and that a robot to be controlled is different.

The first robot 1A and the second robot 1B may be the same type of robot or different types of robots. In the present embodiment, the first robot 1A and the second robot 1B are the same type and have the same configuration as the robot 1 in the first embodiment.

As shown in FIG. 7, the controller 31 of the first robot control device 3A does not include the signature verification section 314 of the first embodiment and the creation section 316 of the second embodiment.

The controller 31 of the second robot control device 3B does not include the signature verification section 314 of the first embodiment and the creation section 316 of the second embodiment, and includes a signature verification section 317 (third verification section). The main function of the signature verification section 317 is the same as that of the signature verification section 314 described in the first embodiment and the signature verification section 412 described in the second embodiment.

The controller 41 of the teaching device 4 includes a creation section 413 as a third creation section that has the same function as the creation section 411 of the first embodiment.

In addition, in the present embodiment, the public key A3 is stored in the storage section 32B (sixth storage section) of the second robot control device 3B, and the private key B3 is stored in the storage section 42 (seventh storage section) of the teaching device 4.

In such a robot system 100, the communication section 33A (fifth communication section) of the first robot control device 3A transmits the unique data D to the teaching device 4 at a predetermined timing, and the creation section 413 of the teaching device 4 creates the file F4 for verification of the unique data D. Next, the teaching device 4 transmits the file F4 for verification to the second robot control device 3B as necessary, and signature verification of the file F4 for verification received by the communication section 33B (sixth communication section) of the second robot control device 3B is performed using the public key A3. In a case where the signature verification is successful, the second robot control device 3B stores the unique data D included in the file F3 for verification in the storage section 32B. According to such a configuration, the unique data D of the first robot control device 3A can be stored in the teaching device 4 as the file F4 for verification, and the unique data D can be copied to the second robot control device 3B. Therefore, for example, the setting of the first robot control device 3A can be reflected in the second robot control device 3B, and the convenience is excellent and the reproducibility and the uniformity of the operation between the robots are excellent. In this case, it is possible to prevent the second robot control device 3B from erroneously executing or storing (overwriting) the tampered program in the storage section 32B. As a result, the safety of the operation of the second robot 1B can be improved, not only the first robot control device 3A. For example, it is possible to perform the setting in a short time in a state of ensuring high security for a plurality of robots in a case of launching a manufacturing line in a factory.

In the robot system 100 according to the present embodiment, the private key B3 is stored in the teaching device 4, and the public key A3 is stored in the second robot control device 3B. That is, in the robot system 100, the public key A3 and the private key B3 are stored in separate devices. As a result, the safety (security robustness) can be improved.

As described above, with the robot system 100, the convenience is excellent, the reproducibility and the uniformity of the operation between the first robot 1A and the second robot 1B are excellent, and the safety and the security robustness of the operation of the second robot 1B can be improved.

As described above, the robot system 100 according to the present embodiment includes the first robot 1A, the second robot 1B that is different from the first robot 1A, the first robot control device 3A that controls the actuation of the first robot 1A, the second robot control device 3B that controls the actuation of the second robot 1B, and the teaching device 4 that is an external device that communicates with each of the first robot control device 3A and the second robot control device 3B. The first robot control device 3A includes a storage section 32A as a fifth storage section that stores the unique data D of the first robot 1A that is subject to signature verification, and a communication section 33A as a fifth communication section that communicates with the teaching device 4. The second robot control device 3B includes a communication section 33B as a sixth communication section that communicates with the teaching device 4, a storage section 32B as a sixth storage section that stores the public key A3, and a signature verification section 317 as a third verification section that performs the signature verification. The teaching device 4 includes a communication section 43 as a seventh communication section that communicates with each of the communication section 33A and the communication section 33B, a storage section 42 as a seventh storage section that stores the private key B3, and a creation section 413 as a third creation section that creates, using the private key B3, the file F4 for verification of the unique data D of the first robot 1A, which is received by the communication section 43 from the communication section 33A. The signature verification section 317 performs the signature verification, using the public key A3, on the file F4 for verification transmitted from the communication section 43 and received by the communication section 33B. With such a robot system 100, the convenience is excellent, and the reproducibility and the uniformity of the operation between the robots are excellent. In addition, the safety and the security robustness of the operation of the second robot 1B can be improved, not only the first robot 1A.

Next, a control operation (signature verification method) of the robot system 100 according to the present embodiment will be described with reference to a flowchart shown in FIG. 8.

First, in Step S301, it is determined whether or not the trigger for transmitting the unique data D is activated. That is, in a case where the state information acquisition section 315 acquires the information on the state of the robot control device 3, the trigger is regarded as being activated. The information on the state of the robot control device 3 is as described above.

In Step S301, in a case where it is determined that the trigger is activated (S301: YES), the process proceeds to Step S302. In Step S301, in a case where it is determined that the trigger is not activated (S301: NO), Step S301 is repeatedly executed until it is determined that the trigger is activated.

Next, in Step S302, the communication section 33A of the first robot control device 3A transmits the unique data D to the communication section 43 of the teaching device 4, and in Step S303, the communication section 43 receives the unique data D. The unique data D transmitted by the communication section 33A includes the compressed data compressed by the compression processing section 313.

Next, in Step S304, the creation section 413 creates, using the private key B3 stored in the storage section 42, the file F4 for verification of the unique data D that is subject to signature verification.

Then, for example, in a case where the user inputs a backup request instruction (transmission instruction) to the teaching device 4, in Step S305, the communication section 43 of the teaching device 4 transmits the file F4 for verification to the communication section 33B of the second robot control device 3B, and in Step S306, the communication section 33 receives the file F4 for verification. The file F4 for verification transmitted by the communication section 43 includes the compressed data.

Next, in Step S307, the signature verification section 317 of the second robot control device 3B performs the signature verification, using the public key A3 stored in the storage section 32B of the second robot control device 3B, on the file F4 for verification transmitted from the communication section 43 and received by the communication section 33B of the second robot control device 3B.

Next, in Step S308, it is determined whether or not the signature verification is successful. The determination in this step is performed by the signature verification section 317. In Step S308, in a case where it is determined that the signature verification is successful (S308: YES), in Step S309, the unique data D is stored in the storage section 32B of the second robot control device 3B. The storage may be overwriting (updating of data), or may be storing the new unique data D while leaving the old unique data.

In Step S308, in a case where it is determined that the signature verification is unsuccessful (S308: NO), in Step S310, a notification is performed by a notification section (not shown). The notification is as described in the first embodiment.

Although not shown, in Step S309, in a case where the unique data D is stored in the storage section 32B of the second robot control device 3B, the notification section may be configured to notify of the fact.

The robot control device 3 described above and the robot system 100 including the robot control device 3 can provide a signature verification method executed by the first robot control device 3A including the fifth storage section that stores the unique data D of the robot 1, the teaching device 4 (external device) including the seventh storage section that stores the private key B3, and the second robot control device 3B including the sixth storage section that stores the public key A3, the signature verification method including
a fifth communication step of transmitting, to the teaching device 4, the unique data D by the first robot control device 3A,
a third creation step of creating, using the private key B3, the file F4 for verification of the unique data D that is subject to signature verification by the teaching device 4,
a sixth communication step of transmitting, to the second robot control device 3B, the file F4 for verification by the teaching device 4, and
a third signature verification step of performing the signature verification, the public key A3, on the file F4 for verification received from the teaching device 4 by the second robot control device 3B.

Any other step may be added before and after each step, specifically, before and after each step in Steps S301 to S310.

With such a signature verification method, the safety and the security robustness in a case where the second robot 1B is operated can be improved as in the effect of the robot system 100 described above. In addition, it is possible to safely ensure the reproducibility and the uniformity of the operation between the first robot 1A and the second robot 1B easily and at a high level.

Although the robot system according to the present disclosure is described above with reference to the embodiments shown in the drawings, the present disclosure is not limited to these embodiments. In addition, each section of the robot system can be replaced with any configuration that can exhibit the same function, or any configuration may be added.

## Claims

1. A robot system comprising:
a robot control device configured to control actuation of a robot;
an external device configured to perform communication with the robot control device, wherein
the robot control device includes
a drive control section configured to control the actuation of the robot,
a first communication section configured to perform communication with the external device,
a first storage section in which a public key and unique data of the robot are stored, and
a first verification section configured to perform signature verification,
the external device includes
a second communication section configured to perform communication with the first communication section,
a second storage section in which a private key is stored, and
a first creation section configured to create, using the private key, a file for verification of the unique data of the robot, the unique data being subject to signature verification and being received by the second communication section from the first communication section, and
the first verification section performs signature verification, using the public key, on the file for verification that is transmitted from the second communication section and that is received by the first communication section.

2. The robot system according to claim 1, wherein
the unique data of the robot includes at least one of an operation program of the robot, an operation parameter of the robot, or operating history information of the robot.

3. The robot system according to claim 2, wherein
the first communication section transmits, to the second communication section, at least a part of the unique data in compressed form.

4. The robot system according to claim 3, wherein
the unique data of the robot includes the operation program of the robot, the operation parameter of the robot, and the operating history information of the robot, and
the first communication section transmits, to the second communication section, data of the operation program of the robot and data of the operation parameter of the robot in compressed form and transmits, to the second communication section, the operating history information of the robot as a separate file without compression.

5. The robot system according to claim 1, wherein
the robot control device includes a determination section configured to determine whether or not a trigger for transmitting the unique data to the second communication section is activated, and
the determination section determines that the trigger is activated when a backup instruction is received.

6. The robot system according to claim 1, wherein
the unique data of the robot includes the operation program of the robot and the operation parameter of the robot,
the robot control device includes a determination section configured to determine whether or not a trigger for transmitting the unique data to the second communication section is activated, and
the determination section determines that the trigger is activated when the operation program of the robot is changed or when the operation parameter of the robot is changed.

7. The robot system according to claim 1, wherein
the first communication section transmits, to the second communication section, the unique data at a predetermined time interval.

8. A robot system comprising:
a robot control device configured to control actuation of a robot;
an external device configured to communicate with the robot control device, wherein
the robot control device includes
a drive control section configured to control the actuation of the robot,
a third communication section configured to perform communication with the external device,
a third storage section in which a private key and unique data of the robot are stored, and
a second creation section configured to create, using the private key, a file for verification of the unique data of the robot, the unique data being subject to signature verification,
the external device includes
a fourth communication section configured to perform communication with the third communication section,
a fourth storage section in which a public key is stored, and
a second verification section configured to perform signature verification,
the second verification section performs signature verification, using the public key, on the file for verification that is transmitted from the third communication section and that is received by the fourth communication section, and
the fourth communication section transmits, to the third communication section, the file for verification with a verified signature.

9. A robot system comprising:
a first robot control device configured to control actuation of a first robot;
a second robot control device configured to control actuation of a second robot; and
an external device configured to communicate with each of the first robot control device and the second robot control device, wherein
the first robot control device includes
a fifth storage section in which unique data of the first robot is stored, and
a fifth communication section configured to perform communication with the external device,
the second robot control device includes
a sixth communication section configured to perform communication with the external device,
a sixth storage section in which a public key is stored, and
a third verification section configured to perform signature verification,
the external device includes
a seventh communication section configured to perform communication with each of the fifth communication section and the sixth communication section,
a seventh storage section in which a private key is stored, and
a third creation section configured to create, using the private key, a file for verification of the unique data of the first robot, the unique data being received by the seventh communication section from the fifth communication section, and
the third verification section performs signature verification, using the public key, on the file for verification that is transmitted from the seventh communication section and that is received by the sixth communication section.
